# EUROPEAN PATENT APPLICATION

(11) **EP 3 836 059 A1**
(43) Date of publication of application: **16.06.2021**
(21) Application number: 20195377.5
(22) Date of filing: 09.09.2020
(51) Int. Cl.: G06Q 20/20, G06Q 20/32, G07G 1/00

(54) **SHOPPING ASSISTANCE DEVICE, SHOPPING ASSISTANCE PROGRAM, SERVER, CONTROL PROGRAM FOR SERVER, AND SHOPPING ASSISTANCE METHOD**

(30) Priority: 10.12.2019 JP 2019222802
(71) Applicant: Toshiba TEC Kabushiki Kaisha, Tokyo 141-8562 (JP)
(72) Inventor: KAWAMOTO, Tsuyoshi, Shinagawa-ku, Tokyo 141-8562 (JP)
(74) Representative: Bandpay & Greuter

(57) **Abstract**

A privately owned communication terminal is enabled to be used as a shopping assistance device in a shopping assistance system introduced at a plurality of stores, without requiring complicated setup work on the communication terminal. The shopping assistance device accepts an entry operation to one store and acquires entry store identification information identifying the store and setup information associated with the identified. The device stores the entry store identification information and the setup information that are acquired. The device accepts an exit operation from one store and acquire exit store identification information identifying the store. The device clears the entry store identification information and the stored setup information, when the exit store identification information matches the entry store identification information.

## Description

### FIELD

Embodiments described herein relate generally to a shopping assistance device, a shopping assistance program, a server, a control program for a server, and a shopping assistance method.

### BACKGROUND

A shopping assistance system where a consumer, when purchasing a commodity in a selling area, operates a shopping assistance device by himself or herself to scan a commodity code for identifying the commodity and thus registers the sale of commodity by self-service, is known.

In a shopping assistance system of this type, typically a store lends a consumer a terminal that can scan a commodity code as a shopping assistance device. For example, the store attaches a terminal as a shopping assistance device to a shopping cart and thus lends the consumer the terminal. In such a method, the shopping assistance device is a device that is made exclusively for the store. Therefore, information unique to the store can be set in advance in the shopping assistance device.

Meanwhile, the use of a communication terminal such as a smartphone privately owned by a consumer, as a shopping assistance device, has been considered recently. Using a privately owned communication terminal as a shopping assistance device is advantageous for the store in that the initial capital investment can be saved. This use is also advantageous for the consumer in that high operability is achieved as the consumer can use the same communication terminal at a plurality of stores to register a commodity by self-service.

However, in the shopping assistance system, on scanning a commodity code, the shopping assistance device transmits the commodity code to a server in the store. Therefore, to use a privately owned communication terminal as a shopping assistance device, the shopping assistance system needs to set connection information for wireless communication with the server in each store, in the communication terminal. Also, for example, a timeout time that results in communication error with the server in each store, the number of retries when an error has occurred, and the like, are set on a per store basis or on a per store-operating corporation basis. Therefore, the shopping assistance system also needs to set operation limitation information such as the timeout time and the number of retries on a per store basis or on a per corporation basis, in the communication terminal. However, information necessary for using the shopping assistance system, such as the connection information and the operation limitation information, is information unique to the store or the corporation. Therefore, the information cannot set in advance in the privately owned communication terminal. Every time a consumer visits a store, the information unique to the store or the corporation must be set in a communication terminal owned by the consumer. Thus, simplifying the setup work is desired.

To solve the aforementioned problems, there is provided a shopping assistance device storing a shopping assistance program operating in shopping at a plurality of stores, the device comprising at least one processor of the shopping assistance device configured to: accept an entry operation to one store, acquire entry store identification information identifying the store, and acquire setup information associated with the identified store; store the entry store identification information and the setup information; control a shopping assistance operation based on the stored setup information; accept an exit operation from one store and acquire exit store identification information identifying the store; and clear the entry store identification information and the setup information stored, when the exit store identification information matches the entry store identification information.

Preferably, the at least one processor of the shopping assistance device is further configured to report an error when the exit store identification information does not match the entry store identification information.

Preferably, the setup information includes a parameter for the shopping assistance device to communicate with a server, and the at least one processor of the shopping assistance device is further configured to: communicate an entry notification to the server based on the parameter, when the communication is available; and communicate an exit notification to the server, when the exit store identification information matches the entry store identification information.

There is also provided a server communicating with the shopping assistance device, the server comprising at least one server processor of the server configured to: receive the entry notification and store a date and time of entry corresponding to the shopping assistance device that is a source of the notification; receive the exit notification and store a date and time of exit if the date and time of entry corresponding to the shopping assistance device that is the source of the notification is stored; and determine a shopping assistance operation of the shopping assistance program in the shopping assistance device as an error, when the entry notification is received from the shopping assistance device that stores the date and time of entry but does not store the date and time of exit.

There is also provided a computer readable medium storing a shopping assistance program in a shopping assistance device and operating in shopping at a plurality of stores, the program, when executed, causing at least one processor of the shopping assistance device to perform: accepting an entry operation to one store and acquiring entry store identification information identifying the store and setup information associated with the identified store; storing the entry store identification information and the setup information acquired, into a memory section; controlling a shopping assistance operation, based on the stored setup information; accepting an exit operation from one store and acquiring exit store identification information identifying the store; and clearing the entry store identification information and the setup information stored in the memory section, when the exit store identification information acquired matches the entry store identification information acquired.

Preferably, the computer readable medium further causes, when executed, the at least one computer to perform reporting an error when the store identified by the exit store identification information acquired does not coincide with the store identified by the entry store identification information acquired.

Preferably, the setup information unique to the store includes a parameter for the shopping assistance device to communicate with a server, and the program, when executed, further causes the at least one computer to perform: giving an entry notification to the server via communication with the server based on the parameter, if the communication is available; and giving an exit notification to the server via the communication, when the store identified by the exit store identification information acquired coincides with the store identified by the entry store identification information acquired.

There is also provided a computer readable medium storing a control program, which when executed, causing a server communicating with the shopping assistance device to perform: receiving the entry notification and storing a date and time of entry corresponding to the shopping assistance device that is a source of the notification; receiving the exit notification and storing a date and time of exit on condition that the date and time of entry is stored corresponding to the shopping assistance device that is the source of the notification; and determining a shopping assistance operation of the shopping assistance program in the shopping assistance device as an error, when the entry notification is received from the shopping assistance device that stores the date and time of entry but does not store the date and time of exit.

There is also provided a shopping assistance method for a shopping assistance device operating in shopping at a plurality of stores, the method comprising: accepting an entry operation to one store, acquiring entry store identification information identifying the store and setup information associated with the identified, and storing the entry store identification information and the setup information; controlling a shopping assistance operation of the shopping assistance device, based on the stored setup information; accepting an exit operation from one store, acquiring exit store identification information identifying the store, and clearing the entry store identification information and the setup information that are stored, when the exit store identification information matches the entry store identification information that is stored.

Preferably, the shopping assistance method further comprises reporting an error when the store identified by the exit store identification information does not coincide with the store identified by the entry store identification information.

Preferably, the setup information unique to the store includes a parameter for the shopping assistance device to communicate with a server, and the method further comprises: giving an entry notification to the server via communication with the server based on the parameter, when the communication is available; and giving an exit notification to the server via the communication, when the store identified by the exit store identification information coincides with the store identified by the entry store identification information.

### DESCRIPTION OF THE DRAWINGS

FIG. 1 is a block diagram showing a schematic configuration of a shopping assistance system according to at least one embodiment.
FIG. 2 is a block diagram showing an essential circuit configuration of a shopping assistance device according to at least one embodiment.
FIG. 3 is a schematic view showing the data structure of a shopping assistance program according to at least one embodiment.
FIG. 4 is a schematic view showing the data structure of a store setup table according to at least one embodiment.
FIG. 5 is a block diagram showing an essential circuit configuration of a management server according to at least one embodiment.
FIG. 6 is a schematic view showing a main data structure of a history file according to at least one embodiment.
FIG. 7 is a flowchart showing essential procedures of information processing executed by a processor of the shopping assistance device, based on the shopping assistance program according to at least one embodiment.
FIG. 8 is a flowchart showing essential procedures of the information processing according to at least one embodiment.
FIG. 9 is a flowchart showing essential procedures of the information processing according to at least one embodiment.
FIG. 10 is a flowchart showing essential procedures of entry notification command reception processing executed by a processor of the management server according to at least one embodiment.
FIG. 11 is a flowchart showing essential procedures of exit notification command reception processing executed by the processor according to at least one embodiment.
FIG. 12 shows an example of a check-in screen according to at least one embodiment.
FIG. 13 shows an example of a camera screen according to at least one embodiment.
FIG. 14 shows an example of the camera screen according to at least one embodiment.
FIG. 15 shows an example of an unavailability screen according to at least one embodiment.
FIG. 16 shows an example of a wireless connection screen according to at least one embodiment.
FIG. 17 shows an example of a history error screen according to at least one embodiment.
FIG. 18 shows an example of a check-in completion screen according to at least one embodiment.
FIG. 19 shows an example of a registration screen according to at least one embodiment.
FIG. 20 shows an example of a payment barcode screen according to at least one embodiment.
FIG. 21 shows an example of a checkout screen according to at least one embodiment.
FIG. 22 shows an example of an exit error screen according to at least one embodiment.
FIG. 23 shows an example of a non-payment error screen according to at least one embodiment.

### DETAILED DESCRIPTION

An object of at least one embodiment is to enable a privately owned communication terminal to be used as a shopping assistance device in a shopping assistance system introduced in a plurality of stores, without requiring complicated setup work on the communication terminal.

In general, according to at least one embodiment, a shopping assistance device storing a shopping assistance program operating in shopping at a plurality of stores includes: an entry time acquisition unit; a memory unit; a control unit; an exit time acquisition unit; and a clearance unit (which may be components of at least one computer). The entry time acquisition unit accepts an entry operation to one store and acquires entry store identification information identifying the store and setup information associated with the identified. The memory unit stores the entry store identification information and the setup information acquired by the entry time acquisition unit. The control unit controls a shopping assistance operation of the shopping assistance program, based on the stored setup information. The exit time acquisition unit accepts an exit operation from one store and acquires exit store identification information identifying the store. The clearance unit clears the entry store identification information and the setup information stored in the memory unit, when the exit store identification information acquired by the exit time acquisition unit matches the entry store identification information acquired by the entry time acquisition unit.

At least one embodiment of a shopping assistance device and a shopping assistance system will now be described with reference to the drawings. This embodiment is the case where a communication terminal such as a smartphone owned by a consumer is used as a shopping assistance device in a shopping assistance system introduced in a plurality of stores.

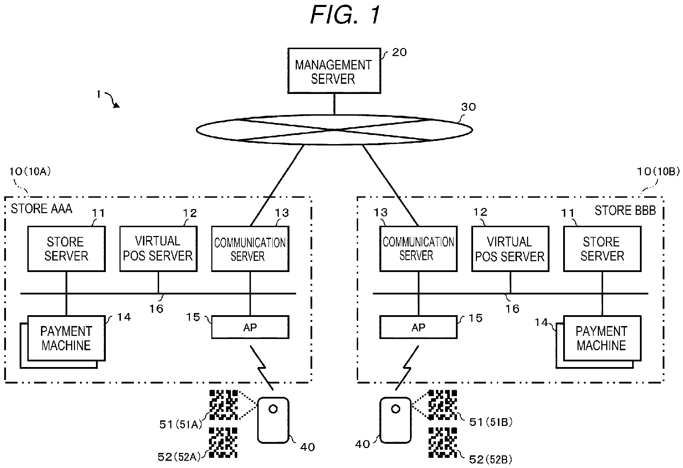

FIG. 1 is a block diagram showing a schematic configuration of a shopping assistance system 1 according to at least one embodiment. The shopping assistance system 1 includes a plurality of store systems 10, a management server 20, a network 30, and a shopping assistance device 40.

The store system 10 is configured on a per store basis where the shopping assistance system 1 is introduced. The number of stores is not particularly limited. FIG. 1 shows the store system 10 configured for a store AAA and the store system 10 configured for a store BBB. The corporation operating the store AAA may be the same as or different from the corporation operating the store BBB. In the description below, the store system of the store AAA is referred to as a store system 10A and the store system of the store BBB is referred to as a store system 10B. Also, the store systems 10A, 10B and the like of the individual stores are collectively referred to as the store system(s) 10.

The store systems 10 have a common basic configuration. That is, the store system 10 has a store server 11, a virtual POS server 12, a communication server 13, a payment machine 14, and an access point 15, which are connected together via a wired LAN (local area network) 16.

The store server 11 is a computer that assists store operation as a whole. For the assistance, the store server 11 manages various databases including a commodity database. The commodity database is an aggregate of commodity records describing data of individual commodities to be sold at the store. That is, in the commodity database managed by the store server 11 in the store system 10A, commodity records about individual commodities to be sold at the store AAA are saved. In the commodity database managed by the store server 11 in the store system 10B, commodity records about individual commodities to be sold at the store BBB are saved. The commodity record describes commodity data such as a commodity code, price, and commodity name. The commodity code is a univocal identification code set on a per commodity basis to identify an individual commodity. Normally, a barcode corresponding to the commodity code is attached to each commodity.

The virtual POS server 12 is a computer which cooperates with the shopping assistance device 40 and thus assists to look as if a commonly known POS terminal is operating. For example, the virtual POS server 12 has the following three functions. The first function is to register sales data of a commodity identified by a commodity code inputted via the shopping assistance device 40, on a per identification information basis of the shopping assistance device 40. In each shopping assistance device 40, unique identification information to identify the shopping assistance device 40 from other shopping assistance devices is set. The second function is to prepare a registration screen based on the sales data of each commodity registered on a per identification information basis of the shopping assistance device 40 and display the registration screen at a display device of the shopping assistance device 40 specified by this identification information. The third function is to generate payment data based on the sales data of each commodity registered on a per identification information basis of the shopping assistance device 40 and transmit the payment data to the store server 11, when the shopping assistance device 40 gives an instruction on payment.

The communication server 13 is a server for assisting data communication with the management server 20 connected via the network 30.

The payment machine 14 is a terminal for settling the payment for a purchased commodity. The payment machine 14 acquires payment data from the store server 11 and settles the payment based on the payment data. The method for settlement is not particularly limited. A commonly known settlement method such as cash settlement, credit card settlement, electronic money settlement, point settlement, or code settlement (also referred to as mobile settlement or smartphone settlement) can be used.

The payment machine 14 may have the function of registering a purchased commodity. For example, as a scanner connected to the payment machine 14 scans a barcode of a purchased commodity, the payment machine 14 inquires a commodity code included in the barcode from the store server 11. In response to this inquiry, the store server 11 sends back commodity data such as the commodity name and price of the commodity identified by the commodity code. Thus, the payment machine 14 registers sales data of the purchased commodity based on the commodity data. The payment machine 14 then settles the payment of the purchased commodity. Alternatively, the payment machine 14 adds the sales data of the purchased commodity to the payment data acquired from the store server 11 and thus settles the payment.

Such a payment machine 14 includes a manned payment machine at which a sales clerk enters information for settlement, and a self-service payment machine at which a consumer enters information for settlement. The store system 10 may have both a manned payment machine and a self-service payment machine or may have only one. As the manned payment machine, a commonly known POS terminal can be employed. As the self-service payment machine, a commonly known self-service or semi-self-service payment machine can be employed.

The access point 15 is a communication facility installed in the store as a relay point for the individual servers (store server 11, virtual POS server 12, communication server 13 or the like) in the store system 10 to communicate data with the shopping assistance device 40 via a wireless LAN. The wireless LAN is, for example, in conformity with the Wi-Fi (trademark registered) standard. Although only one access point 15 is provided in one store system 10 in FIG. 1, the number of access points 15 is not limited. Depending on the scale or the like of the store, a plurality of access points 15 may be connected to the wired LAN 16.

The management server 20 may be a cloud computing server providing a service via a communication network such as the internet. The management server 20 is connected to the communication servers 13 of the store systems 10A, 10B via the network 30. The network 30 is, for example, a WAN (wide area network) using a VPN (virtual private network). The management server 20 can also be connected to the shopping assistance device 40 via a WAN such as the internet or a mobile communication network. Thus, the management server 20 also has the function of relaying data communication between the shopping assistance device 40 and the store systems 10A, 10B in a connected state.

The shopping assistance device 40 is a portable communication terminal which a consumer uses commonly when using the shopping assistance system 1 at a plurality of stores. As will be described in detail later, the shopping assistance device 40 has hardware for scanning at least data codes 51, 52 of a two-dimensional code system. For example, a commercially available smartphone, tablet terminal or the like equipped with a digital camera can be used as the shopping assistance device 40. In this embodiment, a communication terminal privately owned by a consumer is used as the shopping assistance device 40.

The data code 51 and the data code 52 are prepared on a per store basis. The data code 51 is prepared at an entrance of each store. The data code 52 is prepared at an exit of each store. In the description below, the data code 51 is referred to as an entry data code 51. The data code 52 is referred to as an exit data code 52.

The entry data code 51 and the exit data code 52 are setup information unique to a store or a corporation operating the store, encoded in a predetermined two-dimensional code system. The setup information has an item common to all the stores. The information of each item differs among the stores. In the description below, the entry data code 51 and the exit data code 52 for the store AAA are referred to as an entry data code 51A and an exit data code 52A. The entry data code 51 and the exit data code 52 for the store BBB are referred to as an entry data code 51B and an exit data code 52B.

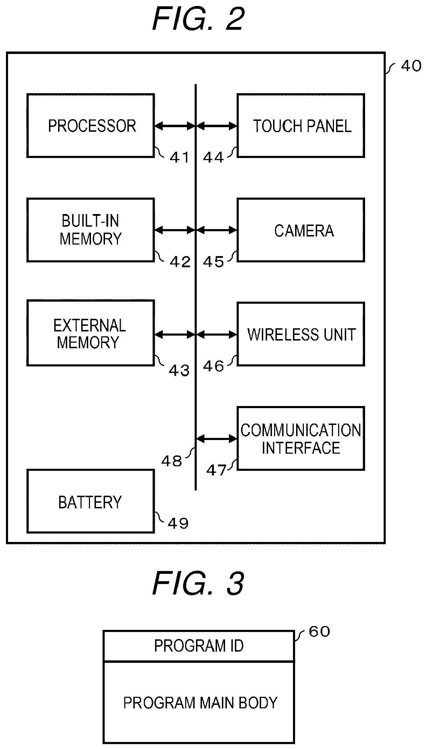

FIG. 2 is a block diagram showing an essential circuit configuration of the shopping assistance device 40. As shown in FIG. 2, the shopping assistance device 40 has a processor 41, a built-in memory 42, an external memory 43, a touch panel 44, a camera 45, a wireless unit 46, a communication interface (I/F) 47, and a system transmission line 48. The shopping assistance device 40 is also equipped with a rechargeable battery 49 as a drive source.

The system transmission line 48 includes an address bus, a data bus, a control signal line and the like. The shopping assistance device 40 connects the processor 41, the built-in memory 42, the external memory 43, the touch panel 44, the camera 45, the wireless unit 46, and the communication I/F 47 to the system transmission line 48. In the shopping assistance device 40, the processor 41, the built-in memory 42, the external memory 43, and the system transmission line 48 connecting these components, together form a computer.

The processor 41 is equivalent to a central unit of the computer. The processor 41 controls each component in order to realize various functions as the shopping assistance device 40, according to an operating system or application program. The processor 41 is, for example, a CPU (central processing unit).

The built-in memory 42 is equivalent to a main memory of the computer. The built-in memory 42 includes a non-volatile memory area and a volatile memory area. The built-in memory 42 stores an operating system or application program in the non-volatile memory area. The built-in memory 42 stores necessary data for the processor 41 to execute processing to control each component, in the volatile memory area. The built-in memory 42 also uses the volatile memory area as a work area where data is rewritten by the processor 41 according to need. The non-volatile memory area is, for example, a ROM (read-only memory). The volatile memory area is, for example, a RAM (random-access memory).

The external memory 43 is equivalent to an auxiliary memory of the computer. For example, an SD memory card, USB memory or the like can be the external memory 43. The external memory 43 saves data used by the processor 41 to perform various kinds of processing or data generated through processing by the processor 41, or the like. The external memory 43 may store the application program.

The touch panel 44 is a device functioning as both an input device and a display device of the shopping assistance device 40. The touch panel 44 detects a touch position on a displayed image and outputs information about the touch position to the processor 41.

The camera 45 may be an image pickup device built in the shopping assistance device 40. The camera 45 operates as a still image or dynamic image pickup device or as a scanning device for a data code such as a barcode or two-dimensional code, based on an application program installed in the shopping assistance device 40. The camera 45 is an example of a code scanner.

The wireless unit 46 is a circuit for data communication with the access point 15, based on a wireless LAN communication protocol.

The communication interface 47 is a circuit for data communication with the management server 20 connected via the internet or a mobile communication network.

The shopping assistance device 40 of such a configuration stores a shopping assistance program 60 (see FIG. 3). The shopping assistance program 60 is an application program executed in shopping at the store AAA or the store BBB where the shopping assistance system 1 is introduced.

FIG. 3 is a schematic view showing the data structure of the shopping assistance program 60. As shown in FIG. 3, the shopping assistance program 60 is formed of a program ID and a program main body. The program ID is univocal identification information that is set on a per program basis in order to individually identify the shopping assistance program 60 of each shopping assistance device 40. The program ID also functions as the identification information of the shopping assistance device 40.

The shopping assistance program 60 may be installed in the built-in memory 42 or the external memory 43. The method for installing the shopping assistance program 60 in the built-in memory 42 or the external memory 43 is not particularly limited. The shopping assistance program 60 can be recorded in a removable recording medium or distributed by communication via a network and then installed in the built-in memory 42 or the external memory 43. The recording medium may be in any form that can store a program and is readable by the device, such as an SD memory card or USB memory.

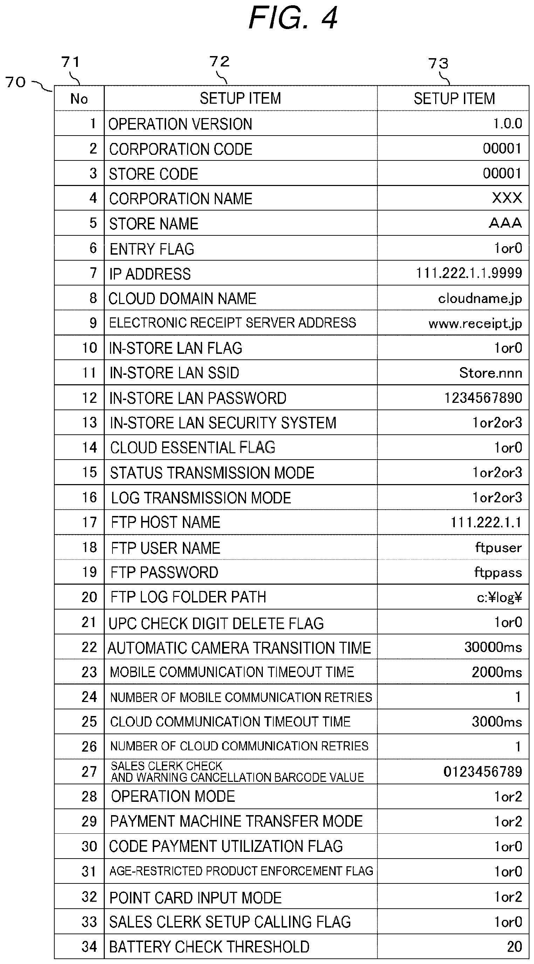

The shopping assistance device 40 forms a store setup table 70 (see FIG. 4) as a data table which the processor 41 refers to when processing information according to the shopping assistance program 60. The store setup table 70 is formed in the external memory 43. The store setup table 70 may be formed in the volatile area of the built-in memory 42.

FIG. 4 is a schematic view showing the data structure of the store setup table 70. As shown in FIG. 4, the store setup table 70 is formed of a first field 71 of serial number, a second field 72 of setup item, and a third field 73 of setup data. In the first field 71, serial numbers No.1 to No.34 are described. In the second field 72, 34 setup items corresponding to the serial numbers No.1 to No.34, respectively, are described. In the third field 73, data of the setup items corresponding to the serial numbers No.1 to No.34 are selectively described. The data of the setup items are included in the entry data code 51 and the exit data code 52. As a consumer scans the entry data code 51A of the store AAA with the camera 45 of the shopping assistance device 40, the data of each setup item related to the store AAA is described into the third field 73 of the store setup table 70 in the shopping assistance device 40. As a consumer scans the entry data code 51B of the store BBB with the camera 45 of the shopping assistance device 40, the data of each setup item related to the store BBB is described into the third field 73 of the store setup table 70.

The setup item corresponding to the serial number No.1 is operation version. The latest version of the shopping assistance program 60 is encoded in the entry data code 51 and the exit data code 52.

The setup item corresponding to the serial number No.2 is corporation code. A corporation code for identifying the corporation operating the store AAA is encoded in the entry data code 51A and the exit data code 52A. A corporation code for identifying the corporation operating the store BBB is encoded in the entry data code 51B and the exit data code 52B.

The setup item corresponding to the serial number No.3 is store code. A store code for identifying the store AAA is encoded in the entry data code 51A and the exit data code 52A. A store code for identifying the store BBB is encoded in the entry data code 51B and the exit data code 52B.

The setup item corresponding to the serial number No.4 is corporation name. The name of the corporation operating the store AAA is encoded in the entry data code 51A and the exit data code 52A. The name of the corporation operating the store BBB is encoded in the entry data code 51B and the exit data code 52B.

The setup item corresponding to the serial number No.5 is store name. The name of the store AAA is encoded in the entry data code 51A and the exit data code 52A. The name of the store BBB is encoded in the entry data code 51B and the exit data code 52B.

In this way, in the third field 73 of the setup data corresponding to the serial numbers No.2 to No.5 in the store setup table 70, information for identifying the store where a consumer shops using the shopping assistance device 40 is set. That is, the entry data code 51 and the exit data code 52 representing the setup information unique to the store includes the information for identifying the store where a consumer shops using the shopping assistance device 40.

The setup item corresponding to the serial number No.6 is entry flag. The entry flag is 1-bit data for identifying whether the present code is the entry data code 51 or the exit data code 52. In at least one embodiment, The entry flag "1" is encoded in the entry data code 51. The entry flag "0" is encoded in the exit data code 52.

The setup item corresponding to the serial number No.7 is IP address. The IP address of the communication server 13 provided in the store AAA is encoded in the entry data code 51A and the exit data code 52A. The IP address of the virtual POS server 12 provided in the store BBB is encoded in the entry data code 51B and the exit data code 52B.

The setup item corresponding to the serial number No.8 is cloud domain name. The domain name of the management server 20 is encoded in the entry data code 51 and the exit data code 52 of each store.

The setup item corresponding to the serial number No.9 is electronic receipt server address. The electronic receipt server is a server specializing in the service of providing an electronic receipt, which is a receipt in an electronic form, to a consumer's terminal. The network address of the electronic receipt server used by the store AAA is encoded in the entry data code 51A and the exit data code 52A. The network address of the electronic receipt server used by the store BBB is encoded in the entry data code 51B and the exit data code 52B.

The setup item corresponding to the serial number No.10 is in-store LAN flag. The in-store LAN flag is 1-bit data for identifying whether or not a wireless LAN in the store is used as a communication medium between the shopping assistance device 40 and the store system 10. In the description below, the wireless LAN in the store is referred to as an in-store LAN. In at least one embodiment, the in-store LAN flag "1" is encoded in the entry data code 51 and the exit data code 52 of the store using the in-store LAN as the communication medium between the shopping assistance device 40 and the store system 10. The in-store LAN flag "0" is encoded in the entry data code 51 and the exit data code 52 of the store that does not use the in-store LAN.

The setup item corresponding to the serial number No.11 is in-store LAN SSID. The SSID (service set identifier) as the identification name of the access point 15 provided in the store AAA is encoded in the entry data code 51A and the exit data code 52A. The SSID of the access point 15 provided in the store BBB is encoded in the entry data code 51B and the exit data code 52B.

The setup item corresponding to the serial number No.12 is in-store LAN password. The password set for the in-store LAN of the store AAA is encoded in the entry data code 51A and the exit data code 52A. The password set for the in-store LAN of the store BBB is encoded in the entry data code 51B and the exit data code 52B.

The setup item corresponding to the serial number No.13 is in-store LAN security system. Data corresponding to the encryption key of the security system (WPA2-PSK, WPA-PSK, WEP or the like) set for the in-store LAN of the store AAA is encoded in the entry data code 51A and the exit data code 52A. Data corresponding to the encryption key of the security system set for the in-store LAN Of the store BBB is encoded in the entry data code 51B and the exit data code 52B.

The setup item corresponding to the serial number No.14 is cloud essential flag. The cloud essential flag is 1-bit data for identifying whether to determine that an error has occurred or to continue the use without determining that an error has occurred, when the shopping assistance device 40 has failed to connect to the management server 20. In at least one embodiment, the cloud essential flag "1" is encoded in the entry data code 51 and the exit data code 52 provided for the store which determines that an error has occurred. The cloud essential flag "0" is encoded in the entry data code 51 and the exit data code 52 provided for the store which continues the use.

The setup item corresponding to the serial number No.15 is status transmission mode. The status transmission mode includes a first mode in which the status of the shopping assistance device 40 is transmitted to the management server 20, a second mode in which the status is transmitted to the store system 10, and a third mode in which the status is not transmitted. The status transmission mode "1" is encoded in the entry data code 51 and the exit data code 52 of the store employing the first mode. The status transmission mode "2" is encoded in the entry data code 51 and the exit data code 52 of the store employing the second mode. The status transmission mode "3" is encoded in the entry data code 51 and the exit data code 52 of the store employing the third mode.

The setup item corresponding to the serial number No.16 is log transmission mode. The log transmission mode includes a first mode in which a log file storing the log data of the shopping assistance device 40 is transmitted only to the management server 20, a second mode in which the log file is transmitted only to the store system 10, a third mode in which the log file is transmitted to both the management server 20 and the store system 10, and a fourth mode in which the log file is not transmitted. The log transmission mode "1" is encoded in the entry data code 51 and the exit data code 52 of the store employing the first mode. The log transmission mode "2" is encoded in the entry data code 51 and the exit data code 52 of the store employing the second mode. The log transmission mode "3" is encoded in the entry data code 51 and the exit data code 52 of the store employing the third mode. The log transmission mode "4" is encoded in the entry data code 51 and the exit data code 52 of the store employing the fourth mode.

The setup item corresponding to the serial number No.17 is FTP host name. If the log transmission mode is the first mode or the third mode, the log file is transmitted to the management server 20 via the internet. The host name or IP address of the protocol used to transmit the log file to the management server 20 is encoded in the entry data code 51 and the exit data code 52.

The setup item corresponding to the serial number No.18 is FTP user name. The user name of the protocol used to transmit the log file to the management server 20 is encoded in the entry data code 51 and the exit data code 52.

The setup item corresponding to the serial number No.19 is FTP password. The password of the protocol used to transmit the log file to the management server 20 is encoded in the entry data code 51 and the exit data code 52.

The setup item corresponding to the serial number No.20 is FTP log folder path. The path name of the log file transmitted to the management server 20 via the internet is encoded in the entry data code 51 and the exit data code 52.

In this way, in the third field 73 of the setup data corresponding to the serial numbers No.7 to No.20 in the store setup table 70, parameters necessary for the shopping assistance device 40 to communicate are set. That is, the entry data code 51 and the exit data code 52 representing the setup information unique to the store include parameters necessary for the shopping assistance device 40 to communicate.

The setup item corresponding to the serial number No.21 is UPC check digit delete flag. The UPC check digit delete flag is 1-bit data for identifying whether to delete the UPC (Universal Product Code) check digit, which is a type of commodity code, or not. In at least one embodiment, the UPC check digit delete flag "1" is encoded in the entry data code 51 and the exit data code 52 of the store which deletes the check digit. The UPC check digit delete flag "0" is encoded in the entry data code 51 and the exit data code 52 of the store which does not delete the check digit.

The setup item corresponding to the serial number No.22 is automatic camera transition time. The automatic transition time of the camera 45 in the shopping assistance device 40 is set on a per store basis. That is, the automatic camera transition time set at the store AAA is encoded in the entry data code 51A and the exit data code 52A. The automatic camera transition time set at the store BBB is encoded in the entry data code 51B and the exit data code 52B.

The setup item corresponding to the serial number No.23 is mobile communication timeout time. The timeout time applied when the shopping assistance device 40 communicates with the store system 10 via the wireless LAN is set on a per store basis. That is, the mobile communication timeout time set at the store AAA is encoded in the entry data code 51A and the exit data code 52A. The mobile communication timeout time set at the store BBB is encoded in the entry data code 51B and the exit data code 52B.

The setup item corresponding to the serial number No.24 is the number of mobile communication retries. The number of retries to cope with a timeout when the shopping assistance device 40 communicates with the store system 10 via the wireless LAN is set on a per store basis. That is, the number of mobile communication retries set at the store AAA is encoded in the entry data code 51A and the exit data code 52A. The number of mobile communication retries set at the store BBB is encoded in the entry data code 51B and the exit data code 52B.

The setup item corresponding to the serial number No.25 is cloud communication timeout time. The timeout time applied when the shopping assistance device 40 communicates with the store system 10 via the management server 20 is set on a per store basis. That is, the cloud communication timeout time set at the store AAA is encoded in the entry data code 51A and the exit data code 52A. The cloud communication timeout time set at the store BBB is encoded in the entry data code 51B and the exit data code 52B.

The setup item corresponding to the serial number No.26 is the number of cloud communication retries. The number of retries to cope with a timeout when the shopping assistance device 40 communicates with the store system 10 via the management server 20 is set on a per store basis. That is, the number of cloud communication retries set at the store AAA is encoded in the entry data code 51A and the exit data code 52A. The number of cloud communication retries set at the store BBB is encoded in the entry data code 51B and the exit data code 52B.

The setup item corresponding to the serial number No.27 is sales clerk check and warning cancellation barcode value. For example, when a consumer purchases an age-restricted product such as an alcoholic beverage or cigarettes, a sales clerk needs to check the consumer's age. The sales clerk checking the consumer's age allows the shopping assistance device 40 to scan a sales clerk check and warning cancellation barcode that is made exclusively for the store. The value of the sales clerk check and warning cancellation barcode used by the sales clerk at the store AAA is encoded in the entry data code 51A and the exit data code 52A. The value of the sales clerk check and warning cancellation barcode used by the sales clerk at the store BBB is encoded in the entry data code 51B and the exit data code 52B.

The setup item corresponding to the serial number No.28 is operation mode. The operation mode includes a normal mode in which the shopping assistance system is used normally, and a demonstration mode in which the shopping assistance system is used as a demonstration. The operation mode "1" may be encoded in the entry data code 51 and the exit data code 52 used in the normal mode. The operation mode "0" may be encoded in the entry data code 51 and the exit data code 52 used in the demonstration mode.

The setup item corresponding to the serial number No.29 is payment machine transfer mode. In the store system 10, sales data of a purchased commodity whose commodity code is scanned by the consumer with the shopping assistance device 40 is registered into the virtual POS server 12. As the consumer designates the payment for this purchased commodity from the shopping assistance device 40, payment data generated based on the sales data of the purchased commodity registered in the virtual POS server 12 is transferred to the payment machine 14 via the store server 11. The method for transferring the payment data to the payment machine 14 at this point may be a method using a payment barcode linked to the payment data or a method not using the payment barcode. The payment machine transfer mode "1" may be encoded in the entry data code 51 and the exit data code 52 of the store using the payment barcode. The payment machine transfer mode "0" may be encoded in the entry data code 51 and the exit data code 52 of the store which does not use the payment barcode.

The setup item corresponding to the serial number No.30 is code payment utilization flag. One method for settling the payment for a purchased commodity is the code settlement method. The code settlement method is a method of electronically paying the price of a commodity, using the shopping assistance device 40 and a barcode or two-dimensional code. The code payment utilization flag is 1-bit data for identifying whether to utilize the code settlement method or not. In at least one embodiment, the code payment utilization flag "1" is encoded in the entry data code 51 and the exit data code 52 of the store utilizing the code settlement method. The code payment utilization flag "0" is encoded in the entry data code 51 and the exit data code 52 of the store which does not utilize the code settlement method.

The setup item corresponding to the serial number No.31 is age-restricted product enforcement flag. Each store decides whether or not to permit the registration of age-restricted products such as an alcoholic beverage or cigarettes, on the shopping assistance device 40. The age-restricted product enforcement flag may be 1-bit data for identifying whether to permit the registration of age-restricted products on the shopping assistance device 40 or not. In at least one embodiment, the age-restricted product enforcement flag "1" is encoded in the entry data code 51 and the exit data code 52 of the store permitting the registration of age-restricted products on the shopping assistance device 40. The age-restricted product enforcement flag "0" is encoded in the entry data code 51 and the exit data code 52 of the store which does not permit the registration of age-restricted products on the shopping assistance device 40.

The setup item corresponding to the serial number No.32 is point card input mode. The point card number input mode includes a first mode in which a card number is manually inputted, and a second mode in which the camera 45 scans a data code printed on a card. The point card input mode "1" is encoded in the entry data code 51 and the exit data code 52 of the store employing the first mode. The point card input mode "2" is encoded in the entry data code 51 and the exit data code 52 of the store employing the second mode.

The setup item corresponding to the serial number No.33 is sales clerk setup calling flag. Manual input of card identification information of a point card may need checking by a sales clerk. The sales clerk setup calling flag is 1-bit data for identifying whether checking by a sales clerk is needed or not. In at least one embodiment, the sales clerk setup calling flag "1" is encoded in the entry data code 51 and the exit data code 52 of the store which needs checking by a sales clerk. The sales clerk setup calling flag "0" is encoded in the entry data code 51 and the exit data code 52 of the store which does not need checking by a sales clerk.

The setup item corresponding to the serial number No.34 is battery check threshold. A battery power threshold is set on a per store basis or on a per corporation basis so that the shopping assistance device 40 does not run out of battery during shopping. That is, a battery check threshold set by the store AAA is encoded in the entry data code 51A and the exit data code 52A of the store AAA. A battery check threshold set by the store BBB is encoded in the entry data code 51B and the exit data code 52B of the store BBB.

In this way, in the fields corresponding to the serial numbers No.22 to No.34 in the store setup table 70, operation restriction information at a store in using the shopping assistance device 40 at the store is set. That is, the entry data code 51 and the exit data code 52 representing setup information unique to the store includes the operation restriction information at the store in using the shopping assistance device 40 at the store.

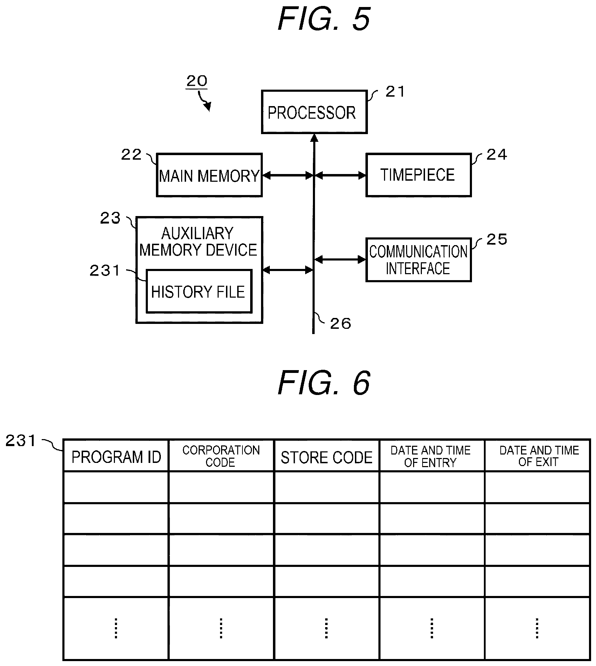

FIG. 5 is a block diagram showing an essential circuit configuration of the management server 20. The management server 20 has a processor 21, a main memory 22, an auxiliary memory device 23, a timepiece 24, a communication interface 25, and a system transmission line 26. The system transmission line 26 includes an address bus, data bus, control signal line or the like. The management server 20 connects the processor 21, the main memory 22, the auxiliary memory device 23, the timepiece 24, and the communication interface 25 to the system transmission line 26. In the management server 20, the processor 21, the main memory 22, the auxiliary memory device 23, and the system transmission line 26 connecting these components, together form a computer.

The processor 21 is equivalent to a central unit of the computer. The processor 21 controls each component in order to realize various functions as the management server 20, according to an operating system or application program. The processor 21 is, for example, a CPU.

The main memory 22 is equivalent to a main memory of the computer. The main memory 22 includes a non-volatile memory area and a volatile memory area. The main memory 22 stores an operating system or application program in the non-volatile memory area. The main memory 22 stores necessary data for the processor 21 to execute processing to control each component, in the volatile memory area. The data may be stored in the non-volatile memory area. The main memory 22 also uses the volatile memory area as a work area where data is rewritten by the processor 21 according to need. The non-volatile memory area is, for example, a ROM. The volatile memory area is, for example, a RAM.

The auxiliary memory device 23 is equivalent to an auxiliary memory of the computer. For example, an EEPROM, HDD or SSD or the like can be the auxiliary memory device 23. The auxiliary memory device 23 saves data used by the processor 21 to perform various kinds of processing or data generated through processing by the processor 21, or the like. The auxiliary memory device 23 may store the application program.

The application program stored in the main memory 22 or the auxiliary memory device 23 includes a control program describing information processing executed by the management server 20. The method for installing the control program in the main memory 22 or the auxiliary memory device 23 is not particularly limited, as in the case of the shopping assistance program 60.

The timepiece 24 tracks the date and time. The management server 20 acquires the date and time tracked by the timepiece 24, as the current date and time.

The communication interface 25 is a circuit for data communication in conformity with a predetermined communication protocol, with the communication server 13 of each store system 10 connected via the network 30.

The management server 20 of such a configuration stores a history file 231 in the auxiliary memory device 23. However, the storage destination of the history file 231 is not limited to the auxiliary memory device 23. The history file 231 may be stored in the volatile memory area of the main memory 22.

FIG. 6 is a schematic view showing a main data structure of the history file 231. As shown in FIG. 6, an area that can save a plurality of records is secured in the history file 231, where one record is formed of program ID, corporation code, store code, date and time of entry, and date and time of exit that correlate with each other. The use of the history file 231 will be clarified in the description of an operation below.

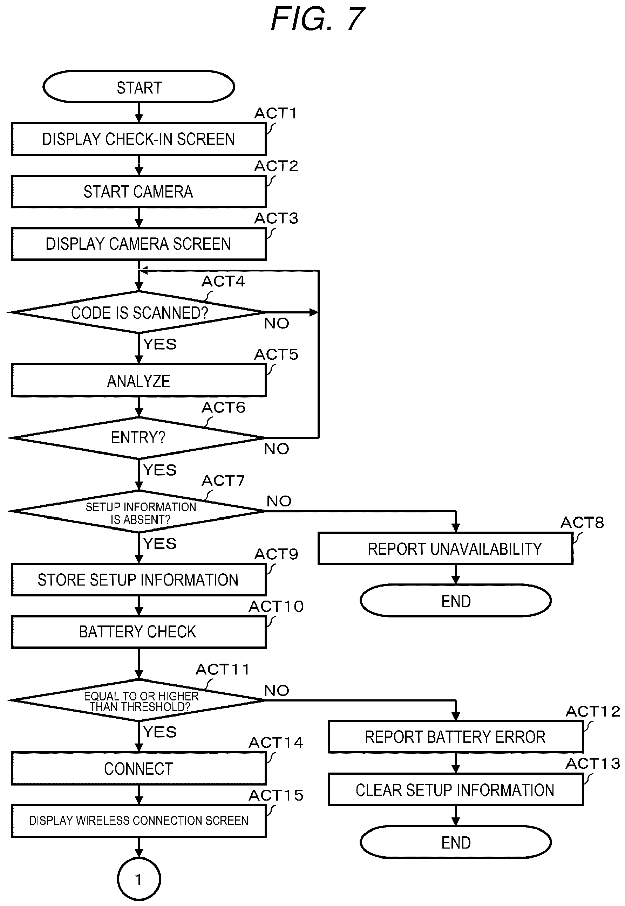

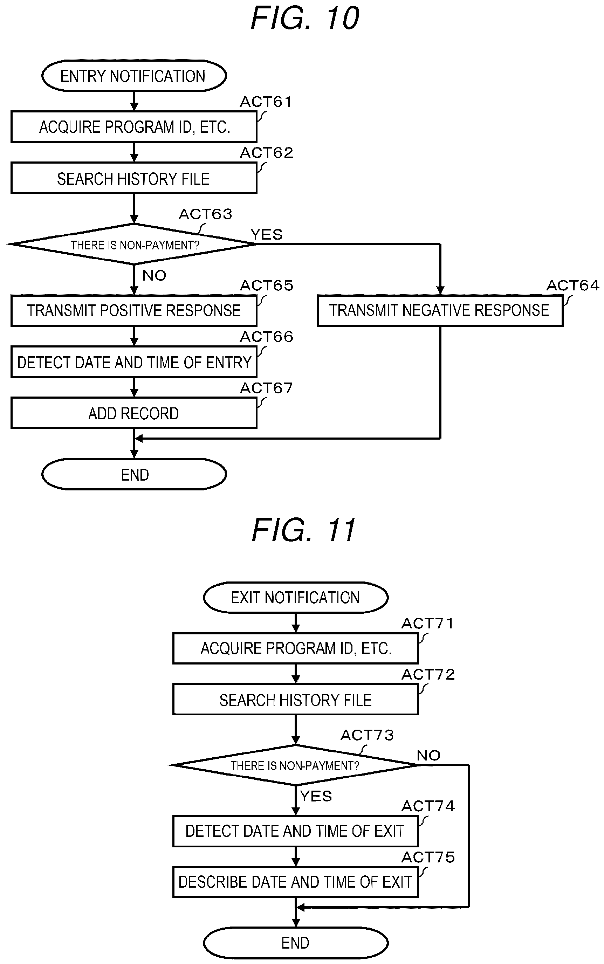

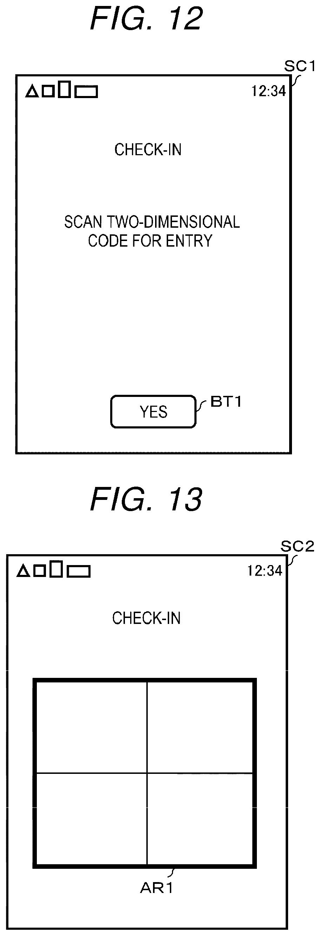

FIGS. 7 to 9 are flowcharts showing essential procedures of information processing executed by the processor 41 of the shopping assistance device 40, based on the shopping assistance program 60. FIGS. 10 and 11 are flowcharts showing essential procedures of command reception processing executed by the processor 21 of the management server 20 on receiving a main command from the shopping assistance device 40. FIGS. 12 to 23 are schematic views showing an example of various screens displayed on the touch panel 44 of the shopping assistance device 40. A main operation of the shopping assistance system 1 including the shopping assistance device 40 will now be described with reference to these drawings. The description of the operation will also clarify the shopping assistance method in this embodiment. The content of the operation described below is an example. The operation procedures and content are not particularly limited, provided that a similar result is achieved.

First, a consumer installs the shopping assistance program 60 in a communication terminal such as a smartphone which the consumer owns. This installation enables the communication terminal to be used as the shopping assistance device 40. The consumer then visits a store where the shopping assistance system 1 is introduced, for example, the store AAA, and starts the shopping assistance program 60 installed in the shopping assistance device 40, prior to starting shopping. Thus, the processor 41 starts information processing according to the procedures shown in the flowcharts of FIGS. 7 to 9.

First, in ACT 1, the processor 41 controls the touch panel 44 to display a check-in screen SC1 (see FIG. 12).

FIG. 12 shows an example of the check-in screen SC1. As shown in FIG. 12, the check-in screen SC1 displays a message that gives an instruction to scan a two-dimensional code for entry, and an image of a "Yes" button BT1 to indicate that the consumer has checked the message. The consumer, having checked the check-in screen SC1, touches the "Yes" button BT1.

On detecting that the "Yes" button BT1 on the check-in screen SC1 is touched, based on a signal from the touch panel 44, the processor 41 in ACT 2 starts the camera 45. In ACT 3, the processor 41 controls the touch panel 44 to display a camera screen SC2 (see FIG. 13).

FIG. 13 shows an example of the camera screen SC2. As shown in FIG. 13, the camera screen SC2 displays an image AR1 showing a two-dimensional code scanning area. Having checked the camera screen SC2, the consumer holds the shopping assistance device 40 in such a way that the lens of the camera 45 built in the shopping assistance device 40 faces the entry data code 51A prepared at the entrance of the store AAA so that the entry data code 51A fits within the image AR1.

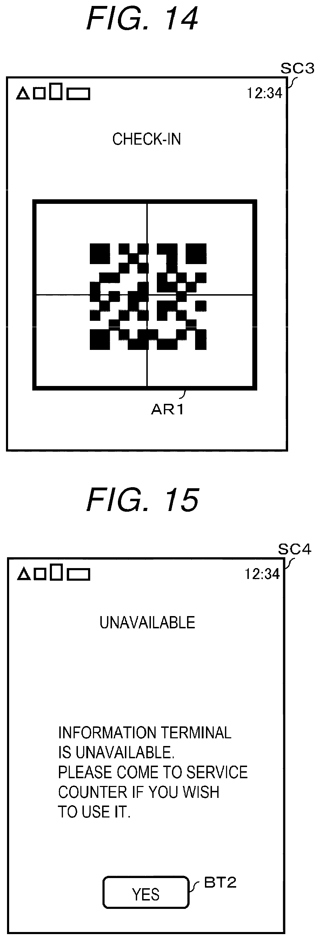

Having displayed the camera screen SC2, the processor 41 in ACT 4 waits until the camera 45 scans a data code of a two-dimensional code system. If the data code of the two-dimension code system comes within the image AR1 as shown in FIG. 14, the processor 41 determines that the data code has been scanned. The processor 41 gives "YES" as the result of the determination in ACT 4 and goes to ACT 5.

In ACT 5, the processor 41 analyzes data encoded by the data code, from the image of the data code picked up by the camera 45. In ACT 6, the processor 41 determines whether the scanned data code is the entry data code 51 with the entry flag "1" or not.

If the data code scanned by the camera 45 is not the entry data code 51, the processor 41 gives "NO" as the result of the determination in ACT 6 and returns to ACT 4. The processor 41 waits again until the camera 45 scans the data code of the two-dimensional code system.

If the data code scanned by the camera 45 is the entry data code 51, the processor 41 gives "YES" as the result of the determination in ACT 6 and goes to ACT 7. In ACT 7, the processor 41 checks whether the data in the third field 73 of the store setup table 70 is cleared or not. If the data in the third field 73 is not cleared and the setup information is described in this field, the processor 41 gives "NO" as the result of the determination in ACT 7 and goes to ACT 8. In ACT 8, the processor 41 reports an unavailability error of the shopping assistance device 40. For example, the processor 41 displays an unavailability error screen SC4 (see FIG. 15) on the touch panel 44 and thus report the unavailability error of the shopping assistance device 40 to the consumer.

FIG. 15 shows an example of the unavailability error screen SC4. As shown in FIG. 15, the unavailability error screen SC4 displays a message to notify the consumer of the unavailability of the shopping assistance device 40, and a "Yes" button BT2 to indicate that the consumer has checked the message. On detecting that the "Yes" button BT2 is touched, the processor 41 ends this information processing.

As described later, the setup information described in the third field 73 of the store setup table 70 is cleared when the consumer, who is the user of the shopping assistance device 40, finishes payment at the store and scans the exit data code 52 with the camera 45. Therefore, the state where the setup information is described in the third field 73 when the consumer scans the entry data code 51 with the camera 45 means that the consumer has not finished payment at the store which the consumer visited previously, or that the consumer has forgotten to scan the exit data code 52. Therefore, the shopping assistance system 1 makes the shopping assistance device 40 unavailable.

The consumer, having checked the unavailability error screen SC4, touches the "Yes" button BT2 and, for example, goes to the service counter. At the service counter, a dedicated device to initialize the store setup table 70 of the shopping assistance device 40 is provided. The consumer asks a sales clerk at the service counter for initialization. The sales clerk asks the consumer for the reasons, and initializes the store setup table 70 if there is no problem. Thus, the consumer can again use the communication terminal as the shopping assistance device 40.

Back to the description of FIG. 7, if the third field 73 of the store setup table 70 is cleared, the processor 41 gives "YES" as the result of the determination in ACT 7 and goes to ACT 9. In ACT 9, the processor 41 describes the data acquired by analyzing the entry data code 51, that is, the setup data of the setup items corresponding to the serial numbers No.1 to No.34, into the third field 73 of the store setup table 70.

On finishing describing the setup data of each setup item in the third field 73 of the store setup table 70, the processor 41 in ACT 10 acquires the data in the third field 73 corresponding to the setup item "battery check threshold" of the serial number No.34, that is, the battery check threshold. In ACT 11, the processor 41 checks whether or not the remaining power of the battery 49 installed in the shopping assistance device 40 is equal to or higher than the battery check threshold.

If the remaining power of the battery 49 is less than the battery check threshold, the processor 41 gives "NO" as the result of the determination in ACT 11 and goes to ACT 12. In ACT 12, the processor 41 reports a battery error. For example, the processor 41 displays a message such as "The battery power is low. Please recharge the battery or the battery can run out during shopping." on the touch panel 44, and thus reports that the remaining power of the battery 49 is low. After the report, the processor 41 in ACT 13 clears the setup information described in the third field 73 of the store setup table 70. The processor 41 then ends this information processing.

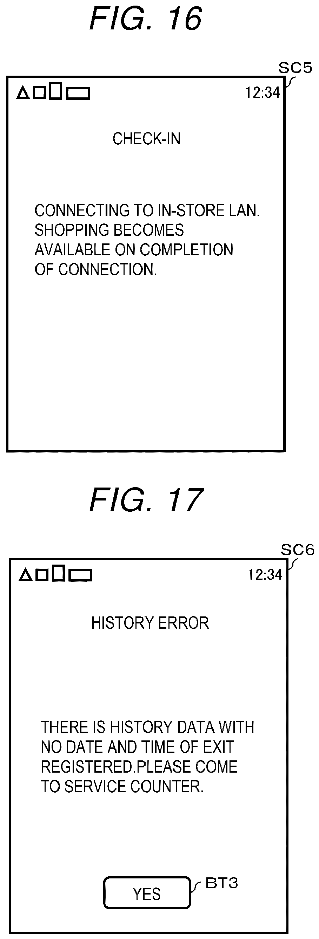

If the processor 41 checks that the remaining power of the battery 49 is equal to or higher than the battery check threshold, the processor 41 gives "YES" as the result of the determination in ACT 11 and goes to ACT 14. In ACT 14, the processor 41 controls the wireless unit 46 and attempts to connect to the in-store LAN, based on the various data of the setup items "in-store LAN SSID", "in-store LAN password", and "in-store LAN security system" corresponding to the serial numbers No.11 to No.13 in the store setup table 70. In ACT 15, the processor 41 controls the touch panel 44 to display a wireless connection screen SC5 (see FIG. 16).

FIG. 16 shows an example of the wireless connection screen SC5. As shown in FIG. 16, the wireless connection screen SC5 displays that the shopping assistance device 40 is attempting to connect to the in-store LAN, and a message that shopping becomes available on completion of the connection. Thus, the shopper waits until the shopping assistance device 40 is connected to the in-store LAN.

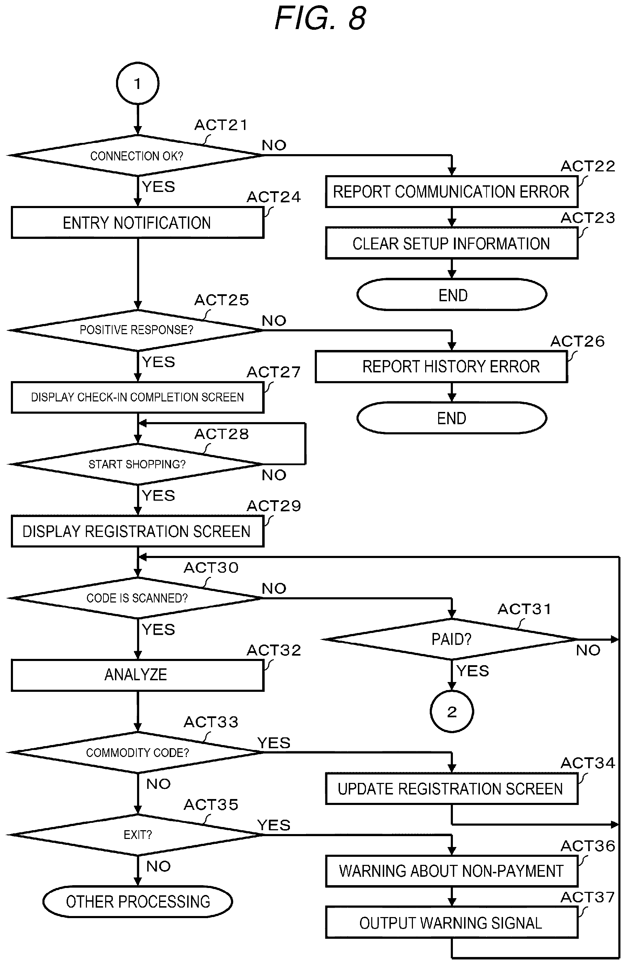

After controlling what is displayed on the wireless connection screen SC5 in ACT 15 in FIG. 7, the processor 41 goes to ACT 21 in FIG. 8. In ACT 21, the processor 41 waits until the shopping assistance device 40 is connected to the in-store LAN. If the shopping assistance device 40 is not connected to the in-store LAN even after the lapse of the time equivalent to the setup data of the setup item "mobile communication timeout time" corresponding to the serial number No.23, the processor 41 repeats a retry by the number of times equivalent to the setup data of the setup item "the number of mobile communication retries" corresponding to the serial number No.24. If the shopping assistance device 40 is not connected to the in-store LAN even after the retry is repeated by the number of mobile communication retries, the processor 41 gives "NO" as the result of the determination in ACT 21 and goes to ACT 22. In ACT 22, the processor 41 reports a communication error. For example, the processor 41 displays a message such as "Communication error. Please try again later." on the touch panel 44 and thus reports that the shopping assistance device 40 cannot be connected to the in-store LAN. After the report, the processor 41 in ACT 23 clears the setup information described in the third field 73 of the store setup table 70. Then, the processor 41 ends this information processing.

If the processor 41 confirms that the shopping assistance device 40 is connected to the in-store LAN, the processor 41 gives "YES" as the result of the determination in ACT 21 and goes to ACT 24. In ACT 24, the processor 41 controls the wireless unit 46 to transmit an entry notification command addressed to the management server 20. This control causes the wireless unit 46 to transmit an entry notification command. The entry notification command is received at the access point 15 via the in-store LAN, then transmitted from the communication server 13 to the network 30, and received by the communication interface 25 of the management server 20. The entry notification command includes the program ID of the shopping assistance program 60, and the corporation code and the store code, of the setup information described in the third field 73 of the store setup table 70.

On receiving the entry notification command via the communication interface 25, the processor 21 of the management server 20 starts entry notification reception processing according to the procedures shown in the flowchart of FIG. 10. In ACT 61, the processor 21 acquires the program ID, the corporation code, and the store code from the entry notification command. In the description below, these program ID, corporation code, and store code are referred to as an acquired program ID, acquired corporation code, and acquired store code.

In ACT 62, the processor 21 searches the history file 231 for the acquired program ID. Then, in ACT 63, the processor 21 checks whether there is a non-payment record as a record including the acquired program ID or not. Specifically, the processor 21 first checks whether a record including the acquired program ID is saved in the history file 231 or not. If a record including the acquired program ID is not saved in the history file 231, the processor 21 determines that there is no non-payment record.

If a record including the acquired program ID is saved in the history file 231, the processor 21 checks whether or not a date and time of exit is described in the record. If a date and time of exit is described, the processor 21 determines that there is no non-payment record. Meanwhile, if a date and time of exit is not described, the processor 21 determines that there is a non-payment record.

If there is a non-payment record, the processor 21 gives "YES" as the result of the determination in ACT 63 and goes to ACT 64. In ACT 64, the processor 21 controls the communication interface 25 to transmit a negative response command to the shopping assistance device 40 of the entry notification command transmission source. This control causes the communication interface 25 to transmit a negative response command. The negative response command is received by the communication server 13 via the network 30, then wirelessly transmitted from the access point 15, and received by the wireless unit 46 of the shopping assistance device 40 of the entry notification command transmission source. After controlling the transmission of the negative response command, the processor 21 ends the entry notification reception processing.

Meanwhile, if there is no non-payment record, the processor 21 gives "NO" as the result of the determination in ACT 63 and goes to ACT 65. In ACT 65, the processor 21 controls the communication interface 25 to transmit a positive response command to the shopping assistance device 40 of the entry notification command transmission source. This control causes the communication interface 25 to transmit a positive response command. The positive response command is received by the communication server 13 via the network 30, then wirelessly transmitted from the access point 15, and received by the wireless unit 46 of the shopping assistance device 40 of the entry notification command transmission source.

After controlling the transmission of the positive response command, the processor 21 in ACT 66 detects the date and time tracked by the timepiece 24, as the date and time of entry. Then, in ACT 67, the processor 21 adds a record in which the acquired program ID, the acquired corporation code, the acquired store code, and the date and time of entry correspond to each other, into the history file 231. Then, the processor 21 ends the entry notification reception processing.

Returning to the description of FIG. 8, after controlling the transmission of the entry notification command, the processor 41 of the shopping assistance device 40 waits for a response command from the management server 20 in ACT 25. If the processor 41 receives a negative response command, the processor 41 gives "NO" as the result of the determination in ACT 25 and goes to ACT 26. In ACT 26, the processor 41 reports a history error. For example, the processor 41 displays a history error screen SC6 (see FIG. 17) on the touch panel 44 and thus reports to the consumer that an error has occurred in the past history.

FIG. 17 shows an example of the history error screen SC6. As shown in FIG. 17, the history error screen SC6 displays a message to notify that an error has occurred in the past history, and an image of a "Yes" button BT3 to indicate that the consumer has checked the message. On detecting that the "Yes" button BT3 is touched, the processor 41 ends this information processing.

As will be described later, the date and time of exit is described into the record saved in the history file 231, when the consumer, who is the user of the shopping assistance device 40 in which the shopping assistance program 60 specified by the program ID in the record is installed, finishes payment at the store and scans the exit data code 52 with the camera 45. That there is a non-payment record with no date and time of exit described therein means that the consumer has not finished payment at the store which the consumer visited previously, or that the consumer has forgotten to scan the exit data code 52. Therefore, the shopping assistance system 1 reports a history error and makes the shopping assistance device 40 unavailable.

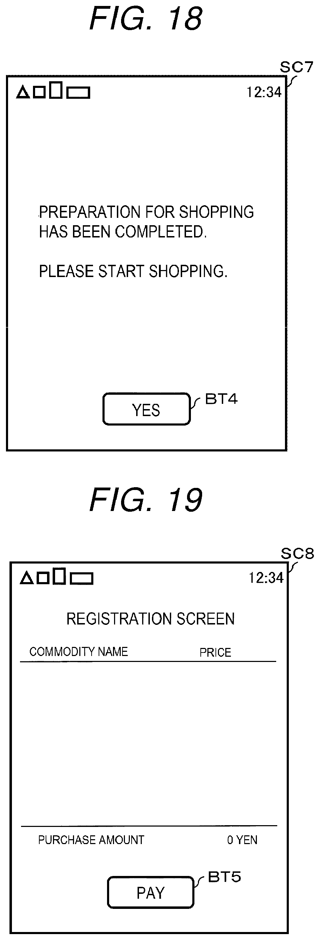

If the processor 41 receive a positive response command as the response command from the management server 20, the processor 41 gives "YES" as the result of the determination in ACT 25 and goes to ACT 27. In ACT 27, the processor 41 controls the touch panel 44 to display a check-in completion screen SC7 (see FIG. 18).

FIG. 18 shows an example of the check-in completion screen SC7. As shown in FIG. 18, the check-in completion screen SC7 displays a message showing that the preparation for shopping has been made, and an image of a "Yes" button BT4. Having checked the check-in completion screen SC7, the consumer touches the "Yes" button BT4.

As the shopping assistance device 40 is connected to the in-store LAN, the store server 11 in the store system 10 acquires the program ID from the shopping assistance device 40. The store server 11 acquires the data of the setup item "corporation code" corresponding to the serial number No.2 and the data of the setup item "store code" corresponding to the serial number No.3 in the store setup table 70 held by the shopping assistance device 40. The store server 11 then checks whether the data of the "corporation code" and the "store code" acquired from the shopping assistance device 40 coincide with a preset corporation code and store code or not. If these codes coincide, the store server 11 notifies the virtual POS server 12 of the program ID of the shopping assistance device 40. The virtual POS server 12 generates a commodity registration table in which the program ID given by the store server 11 is set. The store server 11 wirelessly transmits a check-in completion command to the shopping assistance device 40. In response to this check-in completion command, the processor 41 of the shopping assistance device 40 controls the touch panel 44 to display the check-in completion screen SC7.

Having controlled the display of the check-in completion screen SC7, the processor 41 in ACT 28 waits until an instruction to start shopping is given. On detecting that the "Yes" button BT4 on the check-in completion screen SC7 is touched, based on a signal from the touch panel 44, the processor 41 assumes that an instruction to start shopping is given. The processor 41 gives "YES" as the result of the determination in ACT 28 and goes to ACT 29. In ACT 29, the processor 41 controls the touch panel 44 to display a registration screen SC8 (see FIG. 19).

FIG. 19 shows an example of the registration screen SC8. As shown in FIG. 19, in the registration screen SC8, an area for displaying the commodity name and price of a purchased commodity, and the purchase amount, is formed. The registration screen SC8 also displays an image of a payment button BT5 to designate payment. When placing a purchased commodity into a container such as a shopping basket or shopping cart, the consumer holds the purchased commodity in such a way that a barcode attached to the purchased commodity faces the lens of the camera 45. Thus, the camera 45 may scan the barcode. The barcode includes the commodity code of the purchased commodity.

The processor 41, having displayed the registration screen SC8, checks in ACT 30 whether or not the data code is scanned by the camera 45. If the data code is not scanned, the processor 41 gives "NO" as the result of the determination in ACT 30 and goes to ACT 31. In ACT 31, the processor 41 checks whether the payment button BT5 is touched or not. If the payment button BT5 is not touched, the processor 41 gives "NO" as the result of the determination in ACT 31 and returns to ACT 30. In ACT 30 and ACT 31, the processor 41 waits until the data code is scanned and the payment button BT5 is touched.

If the data code is scanned by the camera 45 in the waiting state of ACT 30 and ACT 31, the processor 41 gives "YES" as the result of the determination in ACT 30 and goes to ACT 32. In ACT 32, the processor 41 analyzes the data code. Then, in ACT 33, the processor 41 checks whether the data code is the commodity code or not. If the data code is the commodity code, the processor 41 gives "YES" as the result of the determination in ACT 33 and goes to ACT 34. In ACT 34, the processor 41 updates the registration screen SC8.

Specifically, the processor 41 transmits the commodity code to the store system 10, using wireless communication. At this point, if the setup data of the setup item "in-store LAN flag" corresponding to the serial number No.10 in the store setup table 70 is "1", the processor 41 controls the wireless unit 46 to transmit the data of the commodity code to the store system 10 via the in-store LAN. In this case, the data of the commodity code is received at the access point 15 and taken into the virtual POS server 12.

Meanwhile, if the setup data of the setup item "in-store LAN flag" is "0", the processor 41 controls the communication interface 47 to transmit the data of the commodity code to the store system 10 via the management server 20. In this case, the data of the commodity code is received by the communication server 13 and taken into the virtual POS server 12.

The virtual POS server 12, having taken in the data of the commodity code, acquires the commodity data such as the commodity name and price of the commodity specified by the commodity code, from the commodity database in the store server 11. Alternatively, the virtual POS server 12 acquires the commodity data from a local commodity database copied into the virtual POS server 12 from the commodity database in the store server 11. The virtual POS server 12 generates sales data of the purchased commodity based on the acquired commodity data and registers the sales data into a commodity registration table on which the program ID of the shopping assistance device 40 is set. The virtual POS server 12 also generates data of the registration screen SC8 based on the data registered in the commodity registration table and transmits the generated data to the shopping assistance device 40. In this case, too, the data of the registration screen SC8 is transmitted via the access point 15 if the setup data of the setup item "in-store LAN flag" is "1". The data of the registration screen SC8 is transmitted to the information terminal via the management server 20 if the setup data of the setup item "in-store LAN flag" is "0". In this way, the processor 41 of the shopping assistance device 40 controls the touch panel 44 to update the registration screen SC8.

After updating the registration screen SC8, the processor 41 returns to the waiting state of ACT 30 and ACT 31.

Now, if the purchased commodity is an age-restricted product, the processor 41 performs processing according to the data of the setup item corresponding to the serial number No.31, that is, the age-restricted product enforcement flag. Specifically, if the age-restricted product enforcement flag is "0", the processor 41 displays a popup image of a message giving an instruction to prohibit the registration of the age-restricted product, as superimposed on the registration screen. If the age-restricted product enforcement flag is "1", the processor 41 does not display the popup image. Also, the virtual POS server 12 may control whether to display the popup image or not.

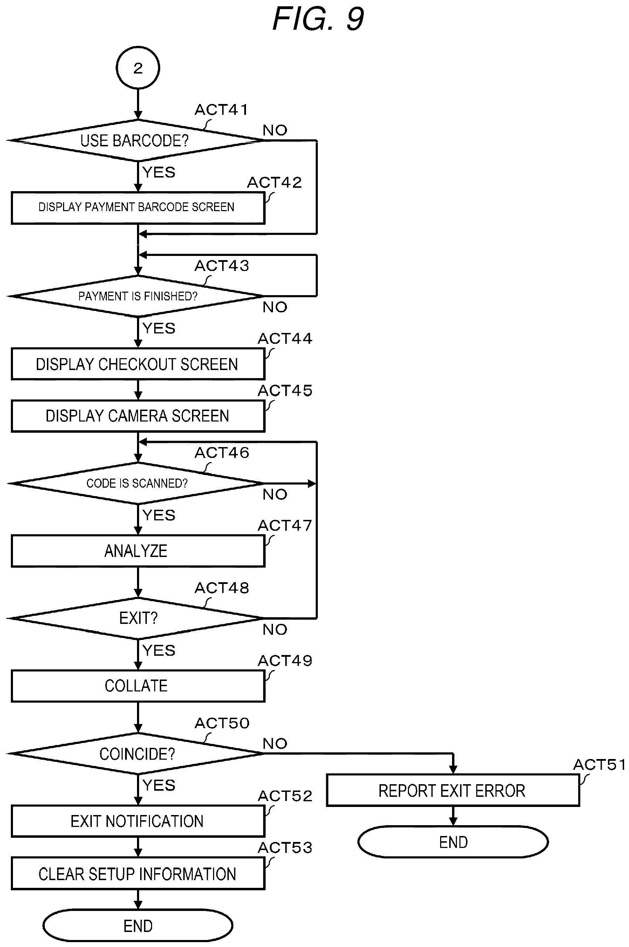

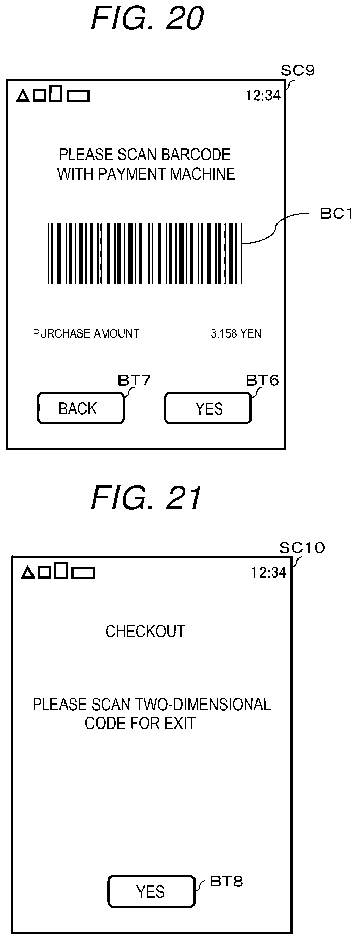

As the shopping is finished, the consumer touches the payment button BT5 on the registration screen SC8. On detecting that the payment button BT5 is touched, based on a signal from the touch panel 44, the processor 41 gives "YES" as the result of the determination in ACT 31 and goes to ACT 41 in FIG. 9. In ACT 41, the processor 41 performs processing according to the data of the setup item "payment machine transfer mode" corresponding to the serial number No.29. That is, if the method of using a payment barcode linked to payment data is employed, the processor 41 gives "YES" as the result of the determination in ACT 41 and goes to ACT 42. In ACT 42, the processor 41 controls the touch panel 44 to display a payment barcode screen SC9 (see FIG. 20).

FIG. 20 shows an example of the payment barcode screen SC9. As shown in FIG. 20, the payment barcode screen SC9 displays a payment barcode BC1 and a message prompting the user to scan the payment barcode BC1 with the payment machine. The payment barcode screen SC9 also displays a "Yes" button BT6 to indicate that the consumer has checked the message, and a "Back" button BT7 to designate going back to shopping.

The virtual POS server 12 generates the payment barcode BC1. That is, the virtual POS server 12 generates a univocal payment code corresponding to a commodity registration table on which the program ID of the shopping assistance device 40 where payment is designated is set. The virtual POS server 12 also generates the payment barcode BC1 including this payment code and transmits the payment barcode BC1 to the shopping assistance device 40 where payment is designated. In this way, the touch panel 44 of the shopping assistance device 40 displays the payment barcode screen SC9.

Having checked the payment barcode screen SC9, the consumer touches the "Yes" button BT6. The consumer then goes to the place where the payment machine 14 is installed, and scans the payment barcode BC1 with the payment machine 14 that is not used. As the payment machine 14 scans the payment barcode, the virtual POS server 12 transmits the data of the commodity registration table corresponding to the payment code included in the payment barcode BC1 to the payment machine 14 via the store server 11. In this way, at the payment machine 14, the payment for the purchased commodity is settled by various settlement methods such as by cash, by credit card, or by electronic money. As the settlement of the payment for the purchased commodity is finished, the virtual POS server 12 transmits a payment finish command addressed to the shopping assistance device 40.

The processor 41, having displayed the payment barcode screen SC9, waits for a payment finish command in ACT 43. If the processor 41 confirms that the "Back" button BT7 is touched in this waiting state, the processor 41 returns the screen on the touch panel 44 to the registration screen SC8, which is the immediately previous screen, and returns to the waiting state of ACT 30 and ACT 31.

If the processor 41 receives a payment finish command via the wireless unit 46 or the communication interface 47, the processor 41 gives "YES" as the result of the determination in ACT 43 and goes to ACT 44. In ACT 44, the processor 41 controls the touch panel 44 to display a checkout screen SC10 (see FIG. 21).

FIG. 21 shows an example of the checkout screen SC10. As shown in FIG. 21, the checkout screen SC10 displays a message giving an instruction to scan the two-dimensional code for exit, and an image of a "Yes" button BT8. Having checked the checkout screen SC10, the consumer touches the "Yes" button BT8.

On detecting that the "Yes" button BT8 on the checkout screen SC10 is touched, based on a signal from the touch panel 44, the processor 41 in ACT 45 controls the touch panel 44 to display the camera screen SC2 (see FIG. 13). The consumer, having checked the camera screen S2, holds the shopping assistance device 40 in such a way that the lens of the camera 45 built in the shopping assistance device 40 faces the exit data code 52 prepared at the exit the store AAA so that the exit data code 52 fits within the image AR1.

Having displayed the camera screen SC2, the processor 41 in ACT 46 waits until the camera 45 scans the data code of the two-dimensional code system. If the data code of the two-dimensional code system fits within the image AR1 as shown in FIG. 14, the processor 41 determines that the data code has been scanned. The processor 41 gives "YES" as the result of the determination in ACT 46 and goes to ACT 47.

In ACT 47, the processor 41 analyzes the data encoded by the data code, from the image of the data code picked up by the camera 45. Then, in ACT 48, the processor 41 determines whether or not the scanned data code is the exit data code 52 with the entry flag "0".

If the data code scanned by the camera 45 is not the exit data code 52, the processor 41 gives "NO" as the result of the determination in ACT 48 and returns to ACT 46. The processor 41 waits again until the camera 45 scans the data code of the two-dimensional code system.

If the data code scanned by the camera 45 is the exit data code 52 with the entry flag "0", the processor 41 gives "YES" as the result of the determination in ACT 48 and goes to ACT 49. In ACT 49, the processor 41 collates the corporation code and the store code of the setup data stored in the third field 73 of the store setup table 70, with the corporation code and the store code of the setup data acquired by analyzing the exit data code 52.

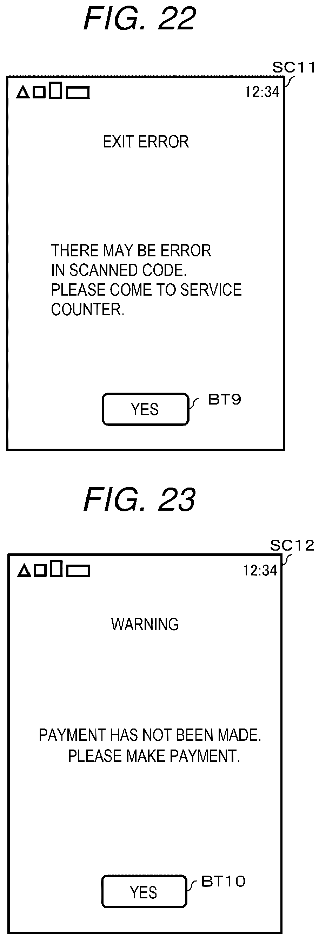

If the two corporation codes and the two store codes do not coincide with each other, the processor 41 gives "NO" as the result of the determination in ACT 50 and goes to ACT 51. The processor 41 reports an exit error. For example, the processor 41 displays an exit error screen SC11 (see FIG. 22) on the touch panel 44 and thus reports to the consumer that there is an exit error.

FIG. 22 shows an example of the exit error screen SC11. As shown in FIG. 22, the exit error screen SC11 displays a message to notify that there is an error in the code scanned by the shopping assistance device 40, and an image of a "Yes" button BT9 to indicate that the consumer has checked the message. On detecting that the "Yes" button BT9 is touched, the processor 41 ends this information processing.

That the two corporation codes and the two store codes do not coincide with each other means that the consumer has scanned the exit data code 52 of a store that is different from the store corresponding to the entry data code 51 scanned when the consumer entered the store. That is, the consumer has not scanned the exit data code 52 at the store which the consumer previously visited, and has scanned the exit data code 52 instead of the entry data code 51 at the store which the consumer has visited this time. Therefore, the shopping assistance system 1 reports an exit error and makes the shopping assistance device 40 unavailable.

Back to the description of FIG. 9, if the two corporation codes and the two store codes coincide with each other, the processor 41 gives "YES" as the result of the determination in ACT 50 and goes to ACT 52. In ACT 52, the processor 41 controls the wireless unit 46 to transmit an exit notification command addressed to the management server 20. This control causes the wireless unit 46 to transmit an exit notification command. The exit notification command is received at the access point 15 via the in-store LAN, then transmitted from the communication server 13 to the network 30, and received by the communication interface 25 of the management server 20. The exit notification command includes the program ID of the shopping assistance program 60, and the corporation code and the store code described in the third field 73 of the store setup table 70.

On receiving the exit notification command via the communication interface 25, the processor 21 of the management server 20 starts exit notification reception processing according to the procedures shown in the flowchart of FIG. 11. In ACT 71, the processor 21 acquires the program ID, the corporation code, and the store code from the exit notification command. In the description below, these program ID, corporation code, and store code are referred to as an acquired program ID, acquired corporation code, and acquired store code.

In ACT 72, the processor 21 searches the history file 231 for the acquired program ID, the acquired corporation code, and the acquired store code. Then, in ACT 73, the processor 21 checks whether there is a non-payment record as a record having the corresponding acquired program ID, acquired corporation code, and acquired store code, or not. Specifically, the processor 21 first checks whether there is a record having the corresponding acquired program ID, acquired corporation code, and acquired store code, or not. If there is no such a record, the processor 21 determines that there is no non-payment record.

If there is such a record, the processor 21 checks whether a date and time of exit is described in the exit date and time field of the record or not. If a date and time of exit is described, the processor 21 determines that there is no non-payment record. Meanwhile, if a date and time of exit is not described, the processor 21 determines that there is a non-payment record.

If there is no non-payment record, the processor 21 gives "NO" as the result of the determination in ACT 73 and ends the exit notification reception processing.

If there is a non-payment record, the processor 21 gives "YES" as the result of the determination in ACT 73 and goes to ACT 74. In ACT 74, the processor 21 detects the date and time tracked by the timepiece 24, as the date and time of exit. Then, in ACT 75, the processor 21 describes the date and time of exit into the exit date and time field of the recording having the corresponding acquired program ID, acquired corporation code, and stored code. Then, the processor 21 ends the exit notification reception processing.

Back to the description of FIG. 9, after controlling the transmission of the entry notification command, the processor 41 in ACT 53 clears the setup information described in the third field 73 of the store setup table 70. Then, the processor 41 ends the information processing according to the shopping assistance program 60.

Back to the description of FIG. 8, in the waiting state of ACT 30 and ACT 31, the consumer may scan the exit data code 52 without operating the payment button BT5. Thus, if the data code scanned by the camera 45 is not the commodity code, the processor 41 gives "NO" as the result of the determination in ACT 33 and goes to ACT 35. In ACT 35, the processor 41 checks whether the exit data code 52 is scanned or not. If the processor 41 confirms that the exit data code 52 is scanned, the processor 41 gives "YES" as the result of the determination in ACT 35 and goes to ACT 36. In ACT 36, the processor 41 gives a warning about non-payment. For example, the processor 41 displays a non-payment warning screen SC12 (see FIG. 23) on the touch panel 44 and thus warns that the payment has not been made. In ACT 37, the processor 41 controls the wireless unit 46 to send a warning signal addressed to the store server 11. This control causes the wireless unit 46 to wirelessly transmit a warning signal. The warning signal is received at the access point 15 via the wireless LAN and sent to the store server 11. On receiving the warning signal, the store server 11 outputs the warning signal, for example, to a client terminal operated by a sales clerk, and thus causes the client terminal to give a warning about a non-payment error.

FIG. 23 shows an example of the non-payment warning screen SC12. As shown in FIG. 23, the non-payment warning screen SC12 displays a message warning that the payment has not been made, and a "Yes" button BT10 to indicate that the consumer has checked the message.

In this way, if the consumer scans the exit data code 52 without operating the payment button BT5, the non-payment warning screen SC12 is displayed to the consumer, and a warning about the non-payment error is given to the sales clerk. Thus, the consumer, having checked the non-payment warning screen SC12, touches the "Yes" button BT10 to return to the registration screen SC8 and touches the payment button BT5.

After controlling the transmission of the warning signal, the processor 41 returns to the waiting state of ACT 30 and ACT 31 on detecting that the "Yes" button BT10 on the non-payment warning screen SC12 is touched.

As is clear from the foregoing description of the operations, the processor 41 of the shopping assistance device 40 executes, for example, the processing in ACT 1 to ACT 5 in FIG. 7 and thus functions as an entry time acquisition unit. That is, the processor 41 accepts an entry operation to one store, that is, the operation of scanning the entry data code 51 with the camera 45, and acquires entry store identification information for identifying the store and setup information unique to the store, based on the entry data code 51.

The processor 41 also cooperates with the store setup table 70 and executes, for example, the processing in ACT 9 in FIG. 7, and thus functions as a memory unit. That is, the processor 41 describes and thus stores the entry store identification information and the setup information acquired by the entry time acquisition unit, into the third field 73 of the store setup table 70.

The processor 41 also executes, for example, the processing in ACT 10 to ACT 15 in FIG. 7, ACT 21 to ACT 34 in FIG. 8, and ACT 41 to ACT 44 in FIG. 9, and thus functions as a control unit. That is, the processor 41 causes the shopping assistance program 60 to operate, based on the setup information described in the third field 73 of the store setup table 70, and controls the shopping assistance operation ranging from the sales registration of a commodity to the payment for the commodity.

The processor 41 also executes, for example, the processing in ACT 43 to ACT 47 in FIG. 9 and thus functions as an exit time acquisition unit. That is, the processor 41 accepts an exit operation from one store, that is, the operation of scanning the exit data code 52 with the camera 45, and acquires exit store identification information for identifying the store, based on the exit data code 52.

The processor 41 also executes, for example, the processing in ACT 49 to ACT 53 in FIG. 9 and thus functions as a clearance unit. That is, the processor 41 clears the entry store identification information and the setup information stored in the memory unit, if the store identified by the exit store identification information acquired by the exit time acquisition unit coincides with the store identified by the entry store identification information acquired by the entry time acquisition unit.

The shopping assistance device 40 having such measures can set the entry store identification information for identifying the store and the setup information unique to the store in the store setup table 70 in the shopping assistance device 40 simply by scanning the entry data code 51 with the camera 45 when entering the store. When exiting the store, the shopping assistance device 40 can clear the setup information set in the store setup table 70, simply by scanning the exit data code 52 with the camera 45. Thus, a communication terminal such as a smartphone that is privately owned can be used as the shopping assistance device 40 in the shopping assistance system 1 introduced at a plurality of stores, without requiring complicated setup work on the communication terminal.

The processor 41 also executes, for example, the processing in ACT 50 and ACT 51 in FIG. 9 and thus functions as an exit time report unit. That is, the processor 41 reports an exit error if the store identified by the exit store identification information acquired by the exit time acquisition unit does not coincide with the store identified by the entry store identification information acquired by the entry time acquisition unit.

The shopping assistance device 40 having such measures reports an exit error if the consumer scans the exit data code 52 of a store that is different from the store corresponding to the entry data code 51 scanned when the consumer entered the stored. Thus, many consumers become aware of the correct operation of scanning the entry data code 51 of a store with the camera 45 when entering the store, and scanning the exit data code 52 of the store when exiting the store, so that an exit error need not be reported. Consequently, wrongdoings such as shoplifting at a store where the shopping assistance system 1 is formed can be restrained.

The processor 41 also execute, for example, the processing in ACT 7 and ACT 8 in FIG. 7 and thus functions as an entry time report unit. That is, the processor 41 reports an unavailability error if the entry store identification information and the setup information are acquired by the entry time acquisition unit in the state where the entry store identification information and the setup information are stored in the store setup table 70.

The shopping assistance device 40 having such measures reports an unavailability error when the consumer scans the entry data code 51 at the store which the consumer visits this time, if the consumer has not scanned the exit data code 52 when exiting the store which the consumer previously visited. Thus, many consumers become aware of the correct operation of scanning the exit data code 52 after payment when exiting the store, so that an unavailability error will not be reported. Consequently, the shopping assistance system 1 is efficiently used at a plurality of stores.

The setup information unique to the store includes a parameter for the shopping assistance device 40 to communicate with the management server 20. The processor 41 executes, for example, the processing in ACT 14 in FIG. 7 and ACT 21 to ACT 24 in FIG. 8 and thus functions as an entry notification unit. That is, as the communication with the management server 20 becomes available based on the parameter, the processor 41 transmits an entry notification command to the management server 20 by the communication. The entry notification command includes the program ID of the shopping assistance program 60, and the corporation code and the store code of the setup information described in the third field 73 of the store setup table 70. Therefore, the management server 20 can identify the shopping assistance program 60 in the shopping assistance device 40 used by the consumer entering the store.

The processor 41 also executes, for example, the processing in ACT 50 to ACT 52 in FIG. 9 and thus functions as an exit notification unit. That is, the processor 41 transmits an exit notification command to the management server 20 if the store identified by the exit store identification information acquired by the exit time acquisition unit coincides with the store identified by the entry store identification information acquired by the entry store acquisition unit. The exit notification command, too, includes the program ID of the shopping assistance program 60, and the corporation code and the store code described in the third field 73 of the store setup table 70. Therefore, the management server 20 can also identify the shopping assistance program 60 in the shopping assistance device 40 used by the consumer exiting the store.

The processor 21 of the management server 20 executes, for example, the processing in ACT 66 and ACT 67 in FIG. 10 and thus functions as an entry time memory unit. That is, in response to the entry notification command, the processor 21 stores the date and time of entry corresponding to the program ID identifying the shopping assistance program 60 in the shopping assistance device that is the source of the notification.

The processor 21 also executes, for example, the processing in ACT 71 to ACT 75 in FIG. 11 and thus functions as an exit time memory unit. That is, in response to the exit notification command, the processor 21 stores the date and time of exit on condition that the date and time of entry is stored corresponding to the program ID identifying the shopping assistance program 60 in the shopping assistance device that is the source of the notification.

The processor 21 also executes, for example, the processing in ACT 62 to ACT 64 in FIG. 10 and thus function as an error processing unit. That is, if the processor 21 receives the entry notification command from the shopping assistance device 40 that stores the date and time of entry but does not store the date and time of exit, the processor 21 transmits a negative response command to this shopping assistance device 40 and determines the operation of the shopping assistance program 60 in this shopping assistance device 40 as an error.

The shopping assistance system 1 including the management server 20 having such measures can determine the operation of the shopping assistance program 60 in the shopping assistance device 40 as an error, if the store setup table 70 in the shopping assistance device 40 is initialized fraudulently. Therefore, unauthorized use of the shopping assistance device 40 by the consumer can be prevented.

An embodiment of the shopping assistance device 40 and the shopping assistance system 1 has been described above. However, the shopping assistance system 1 and the shopping assistance device 40 are not limited to this embodiment.

In the embodiment, the case where items of the setup information encoded by the exit data code 52 are the same as the items of the setup information encoded by the entry data code 51 is described. The items of the setup information encoded by the exit data code 52 may include at least the items identifying this code as the exit data code 52, that is, the entry flag, and the store identification information, that is, the corporation code and the store code. If a plurality of stores belonging to one corporation form the shopping assistance system 1, the corporation code can be omitted.

In the embodiment, the case where the program ID of the shopping assistance program 60 installed in the shopping assistance device 40 is used as the identification information of the shopping assistance device 40 is described. However, the identification information of the shopping assistance device 40 is not necessarily limited to the program ID of the shopping assistance program 60. The identification information that is preset for the communication terminal used as the shopping assistance device 40 may be employed as the identification information of the shopping assistance device 40. That is, the IP address, the terminal ID, the telephone number or the like may be used as the identification information of the shopping assistance device 40.

In the embodiment, the entry data code 51 and the exit data code 52 are used as the method for taking the information of each setup item described in the third field 73 of the store setup table 70, into the shopping assistance device 40. However, the method for taking this information into the shopping assistance device 40 is not limited to this method. For example, if the shopping assistance device 40 is equipped with a contactless IC card technology, an antenna for short-range wireless communication may be arranged at each store and the shopping assistance device 40 may take in the information of each setup item via contactless wireless communication.

In at least one embodiment, 34 types of setup items are described in the store setup table 70. However, the types of setup items are not limited to these types. Other setup items may be added. Alternatively, any one of the setup items may be omitted.

While several embodiments have been described, these embodiments are presented simply as examples and are not intended to limit the scope of the disclosure. These novel embodiments can be carried out in various other forms and can include various omissions, replacements, and modifications without departing from the scope. These embodiments and modifications thereof are included in the scope and also included in the scope of the claims and equivalents thereof.

## Claims

1. A shopping assistance device storing a shopping assistance program operating in shopping at a plurality of stores, the device comprising:
at least one processor of the shopping assistance device configured to:
accept an entry operation to one store, acquire entry store identification information identifying the store, and acquire setup information associated with the identified store;
store the entry store identification information and the setup information;
control a shopping assistance operation based on the stored setup information;
accept an exit operation from one store and acquire exit store identification information identifying the store; and
clear the entry store identification information and the setup information stored, when the exit store identification information matches the entry store identification information.

2. The shopping assistance device according to claim 1, wherein the at least one processor of the shopping assistance device is further configured to report an error when the exit store identification information does not match the entry store identification information.

3. The shopping assistance device according to claim 1 or 2, wherein
the setup information includes a parameter for the shopping assistance device to communicate with a server, and
the at least one processor of the shopping assistance device is further configured to:
communicate an entry notification to the server based on the parameter, when the communication is available; and
communicate an exit notification to the server, when the exit store identification information matches the entry store identification information.

4. A server communicating with the shopping assistance device according to claim 3, the server comprising:
at least one server processor of the server configured to:
receive the entry notification and store a date and time of entry corresponding to the shopping assistance device that is a source of the notification;
receive the exit notification and store a date and time of exit if the date and time of entry corresponding to the shopping assistance device that is the source of the notification is stored; and
determine a shopping assistance operation of the shopping assistance program in the shopping assistance device as an error, when the entry notification is received from the shopping assistance device that stores the date and time of entry but does not store the date and time of exit.

5. A computer readable medium storing a shopping assistance program in a shopping assistance device and operating in shopping at a plurality of stores, the program, when executed, causing at least one processor of the shopping assistance device to perform:
accepting an entry operation to one store and acquiring entry store identification information identifying the store and setup information associated with the identified store;
storing the entry store identification information and the setup information acquired, into a memory section;
controlling a shopping assistance operation, based on the stored setup information;
accepting an exit operation from one store and acquiring exit store identification information identifying the store; and
clearing the entry store identification information and the setup information stored in the memory section, when the exit store identification information acquired matches the entry store identification information acquired.

6. The computer readable medium according to claim 5, further causing, when executed, the at least one computer to perform reporting an error when the store identified by the exit store identification information acquired does not coincide with the store identified by the entry store identification information acquired.

7. The computer readable medium according to claim 5 or 6, wherein
the setup information unique to the store includes a parameter for the shopping assistance device to communicate with a server, and
the program, when executed, further causes the at least one computer to perform:
giving an entry notification to the server via communication with the server based on the parameter, if the communication is available; and
giving an exit notification to the server via the communication, when the store identified by the exit store identification information acquired coincides with the store identified by the entry store identification information acquired.

8. A computer readable medium storing a control program, which when executed, causing a server communicating with the shopping assistance device according to claim 3 to perform:
receiving the entry notification and storing a date and time of entry corresponding to the shopping assistance device that is a source of the notification;
receiving the exit notification and storing a date and time of exit on condition that the date and time of entry is stored corresponding to the shopping assistance device that is the source of the notification; and
determining a shopping assistance operation of the shopping assistance program in the shopping assistance device as an error, when the entry notification is received from the shopping assistance device that stores the date and time of entry but does not store the date and time of exit.

9. A shopping assistance method for a shopping assistance device operating in shopping at a plurality of stores, the method comprising:
accepting an entry operation to one store, acquiring entry store identification information identifying the store and setup information associated with the identified, and storing the entry store identification information and the setup information;
controlling a shopping assistance operation of the shopping assistance device, based on the stored setup information;
accepting an exit operation from one store, acquiring exit store identification information identifying the store, and clearing the entry store identification information and the setup information that are stored, when the exit store identification information matches the entry store identification information that is stored.

10. The shopping assistance method according to claim 9, further comprising reporting an error when the store identified by the exit store identification information does not coincide with the store identified by the entry store identification information.

11. The shopping assistance method according to claim 9 or 10, wherein
the setup information unique to the store includes a parameter for the shopping assistance device to communicate with a server, and
the method further comprises:
giving an entry notification to the server via communication with the server based on the parameter, when the communication is available; and
giving an exit notification to the server via the communication, when the store identified by the exit store identification information coincides with the store identified by the entry store identification information.
